# EUROPEAN PATENT SPECIFICATION

(11) **EP 2 143 546 B1**
(45) Date of publication and mention of the grant of the patent: **08.06.2011**
(21) Application number: 09173607.4
(22) Date of filing: 13.04.2006
(51) Int. Cl.: B29C 49/54, B29C 49/48, B29C 49/06

(54) **Method for manufacturing blow molded containers**
Verfahren zur Herstellung von blasgeformten Behälter
Procédé de fabrication de récipients moulés par soufflage

(30) Priority: 15.04.2005 US 671459 P; 27.02.2006 US 362416; 07.04.2006 US 399430
(43) Date of publication of application: 13.01.2010
(62) Divisional of application: 06750165.0
(73) Proprietor: Graham Packaging Company, L.P., York, PA 17402 (US)
(72) Inventor: Kelley, Paul, Wrightsville, PA 17368 (US); Trude, Gregory A., Clarks Summit, PA 18411 (US)
(74) Representative: Bentz, Jean-Paul

(56) References cited:
- US-A- 3 198 861
- US-A- 4 036 926
- US-A- 5 735 420
- PATENT ABSTRACTS OF JAPAN vol. 012, no. 464 (M-771), 6 December 1988 (1988-12-06) & JP 63 189224 A (YOSHINO KOGYOSHO CO LTD), 4 August 1988 (1988-08-04)

## Description

### BACKGROUND OF THE INVENTION

### Field of the Invention

The present invention relates generally to forming a blow molded container, and more particularly to a method for forming a blow molded container that increases orientation of material at a region of the blow molded container. More particularly, the present invention relates to a method for blow molding a container to be formed with deep-set, grips so that the formed container has secure grippability along with a good ergonomic feel.

### Related Art

Conventionally, a container may be manufactured through a process know as blow molding. In blow molding, a parison is received at a blow molding apparatus, and the parison is enclosed by a container mold. The blow molding apparatus inflates the parison by forcing gas into the parison which causes the parison to stretch and take the shape of the container mold. Once the parison has taken the shape of the container mold, the blow molding step is complete and the container is removed from the container mold for further processing.

One method of manufacturing containers is through a process known as stretch blow molding. In this process, a preformed parison, or preform, is prepared from a thermoplastic material, typically by an injection molding process. The preform typically includes a threaded end, which becomes the threads of the container. During stretch blow molding, the preform is positioned between two open blow mold halves. The blow mold halves close about the preform and cooperate to provide a cavity into which the preform is blown to form the container. Once the mold is closed, a gas is forced into the perform causing it to stretch and to take the shape of the mold as the plastic contacts the mold. After molding, the mold halves open to release the blow molded container.

One problem with stretch blow molding is that stretching of the plastic material may affect the performance of the container at certain areas. While the stretching of the plastic material may not cause problems for most sections of the container, it particularly affects the ability of the plastic material to form around a deep protrusion in the mold. In some applications of container manufacturing, a deep protrusion may be required to form a particular section of a container. For example, the particular sections of the container formed by an inset or deep protrusion may include the dome, sidewalls, and the base of the container. As the plastic contacts the deep protrusion of the mold, the plastic must stretch and flow around the protrusion into a recess. However, the plastic material is less able to flow and stretch around the protrusion because of the contact friction with the mold surface. Insufficient material distribution at a region, such as at the base, may affect the ability of the region to maintain its shape around the protrusion during hot filling, the strength of the region, or the ability of the container to stand on a flat surface.

In some applications of container manufacturing, a deep protrusion may be required at a particular section of a container, most often at a base or at a hand grip of the container. Deep protrusions, when located at the base of the container, are sometimes referred to as "push-ups" since the protrusions push up into the interior of the container. However, employing known techniques to manufacture containers with deep protrusions has various problems. One such problem is the orientation of the plastic material around the deep protrusion. Orientation refers to how closely the molecules in a plastic material are packed together. Orientation of plastic molecules occurs as the plastic material stretches, and the greater the material stretch, the higher the orientation. As the orientation of the plastic molecules increases, the molecules straighten and may form a crystalline structure. Typically, the higher the crystallinity of the plastic, the greater the rigidity of the plastic, which improves the structural integrity of the container. The structural integrity of the container may be important during hot fill processing as the container must be able to withstand the rigors of hot fill processing.

In a hot fill process, a product is added to the container at an elevated temperature, about 82°C, which can be near the glass transition temperature of the plastic material, and the container is capped. During hot fill processing and in the subsequent cooling, the container base may experience roll out, distortion, or deformation that can cause the container to lean or become unstable. This problem can be reduced or eliminated by increasing orientation of material in the container base.

During blow molding of a container, gas is forced into a parison which causes the parison to inflate and stretch to take the shape of the container mold. However, the parison cools as it contacts the container mold. Cooling of the parison affects its ability to stretch, and thus its ability to orient. While this may not cause problems for most sections of the container, it particularly affects the orientation of the material formed around a deep protrusion. As the parison contacts the deep protrusion, the parison must flow around the protrusion into a recess. As the parison contacts the protrusion and cools, the parison is less able to flow around the protrusion, which affects the ability of the parison to stretch and to orient plastic material at the recess. Insufficient orientation at a region, such as at a base or at a hand grip, may affect the ability of the region to maintain its shape around the protrusion, the strength of the region, or the ability of the container to stand on a flat surface. Cooling of the parison also is known to create thick amorphous plastic sections around the protrusion, which adds excess plastic material to the container and affects the rigidity around the protrusion. The thick amorphous plastic sections add to the weight of the container, and thus the cost.

A known system for manufacturing a blow molded container is described in U.S. Patent No. 5,255,889 to Collette et al. In the system described therein, a preform is received and enclosed by a mold chamber, which includes two side movable mold members and a base mold. In the mold chamber, the base mold member has an upper base plug with a protrusion that extends upward toward the center of the mold chamber. During blow molding, gas is forced into the preform to inflate and stretch the preform material into the shape of the mold chamber. As the preform material reaches the protrusion, the material stretches around the protrusion into a recess to form a bearing surface of the container. Once the container is formed, the mold chamber (the two side mold members and the base mold member) opens and releases the molded container. However, the base of the containers generated by this system may have limited crystallinity, a build up of amorphous unoriented material, or other problems in the base similar to those described above due to forcing the preform to stretch around the protrusion into the recess to form the bearing surface of the container.

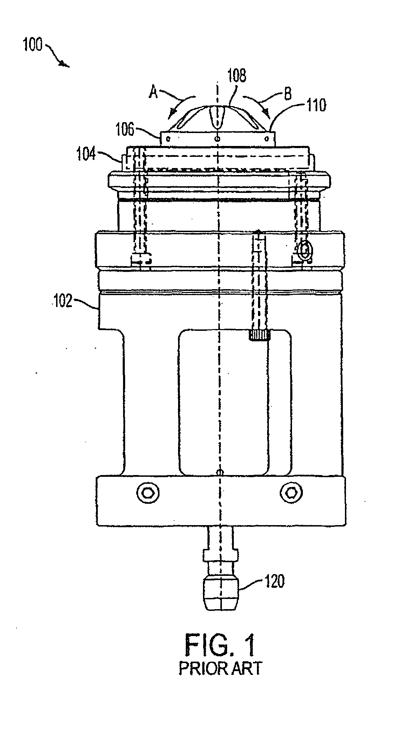

Likewise, FIG. 1 illustrates a base assembly 100 for forming a container base according to the prior art. The base assembly 100 includes a base pedestal 102, a centering pin 120, and a base plug 104, with the base plug 104 being secured to a top surface of the base pedestal 102. The centering pin 120 may be used to secure and position the base assembly in a blow molding apparatus (not shown). The base plug 104 includes a base mold 106 for forming a container base. The base mold 106 includes a protrusion 108 for forming a deep protrusion in the container base, and a surface 110 for forming a bearing surface of the container base.

During blow molding of a parison into a container, the base mold 106 forms the parison material into a base of the container. As the parison material contacts the base mold 106, the parison material stretches around the protrusion 108 down to the surface 110 for forming the bearing surface, as indicated by the arrows A and B. However, once the parison contacts the protrusion 108, the parison material begins to cool and the orientation of the parison material is slowed, which causes the formation of thick amorphous plastic sections in the base. The thick amorphous plastic sections affect the rigidity of the base, the ability of the container to stand on a flat surface, and add to the cost of the container.

A lack of definition in the base caused by the inability of the plastic to properly form at a deep protrusion is a particular problem. While this is a particular problem in the base region, similar problems exist in other regions of a container where an inset is positioned. As stated previously, these other regions formed with an inset or deep protrusion include the dome, the sidewalls, etc. of a container. These problems can exist with any forming process, such as blow molding, where material must flow around a protrusion of a mold to form an inset region of a container. This is particularly true for blow molding processes including stretch blow molding, extrusion blow molding and injection blow molding.

Some containers have deep-set grips on either side of the bottle so that a consumer can easily pick up the filled container with a firm grasp of his/her hand. When blowing deep-set grips with known blow molding processes, plastic material becomes trapped in the grip regions consequently starving other regions of the container of material. To account for this, the container weight is increased as more material is required to be used to ensure that a sufficient amount of material is provided for all parts of the container. Alternatively, design compromises are made so that the resultant thinner regions are closer to the axis of the container causing those regions to be blown with more material. However, blowing heavier containers and the resultant design constraints do not solve the problem described above.

A method of forming a bottle having a concavely curved recessed bottom is disclosed in US Patent US 3 198 861. This known method comprises the steps of forming a bottle having a projecting conversely curved bottom, and then pressing in the bottom whereby the curvature of the bottom is reversed and the bottom becomes permanently recessed and concavely curved.

What is needed is an improved method of forming a container with a deep-set protrusion (e.g., in the base and/or as a grip) that overcomes the shortcomings of conventional solutions that introduce additional costs, molding time, and complexity into the mold setup.

### BRIEF SUMMARY OF THE INVENTION

To this purpose, the method of the invention is defined by the features recited in the claims enclosed.

Further objectives and advantages, as well as the structure and function of preferred embodiments will become apparent from a consideration of the description, drawings, and examples.

### BRIEF DESCRIPTION OF THE DRAWINGS

The foregoing and other features and advantages of the invention will be apparent from the following, more particular description of a preferred embodiment of the invention, as illustrated in the accompanying drawings wherein like reference numbers generally indicate identical, functionally similar, and/or structurally similar elements.

FIG. 1 illustrates a base assembly for forming a container base according to the prior art.

FIGs. 2A-2D illustrate an exemplary embodiment of a base assembly according to the present invention.

FIGs. 3A-3B illustrate an exemplary embodiment of using a base assembly to form a container base according to the present invention.

FIGs. 4A-4B illustrate exemplary embodiments of a push rod repositioning the container base according to the present invention.

FIGs. 5A-5B illustrate an exemplary embodiment of a container prior to and after repositioning according to the present invention.

FIG. 6 depicts an exemplary embodiment of a first stage of a container with the deep-set grip inverted;

FIG. 7 depicts a cross sectional view of the exemplary container of FIG. 6;

FIGs. 8A-B depict an exemplary embodiment inverting a grip of a container;

FIG. 9 illustrates a parison received before a mold according to an exemplary embodiment;

FIG. 10 schematically illustrates an exemplary blow molded container with a movable region;

FIG. 11 schematically illustrates another exemplary blow molded container with a movable region being inverted prior to release from the mold on each side of the container;

FIGs. 12A-C schematically illustrate the movable region of the exemplary container being inverted after release from the mold;

FIG. 13 illustrates a mold for forming half of the container shown in FIG. 6; and

FIG. 14 shows an embodiment of the mold that can be activated to push in an outwardly protruding region toward the center of the container.

Further objectives and advantages, as well as the structure and function of exemplary embodiments will become apparent from a consideration of the description, drawings, and examples.

### DETAILED DESCRIPTION OF THE INVENTION

Embodiments of the invention are discussed in detail below. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the spirit and scope of the invention. All references cited herein are incorporated by reference as if each had been individually incorporated.

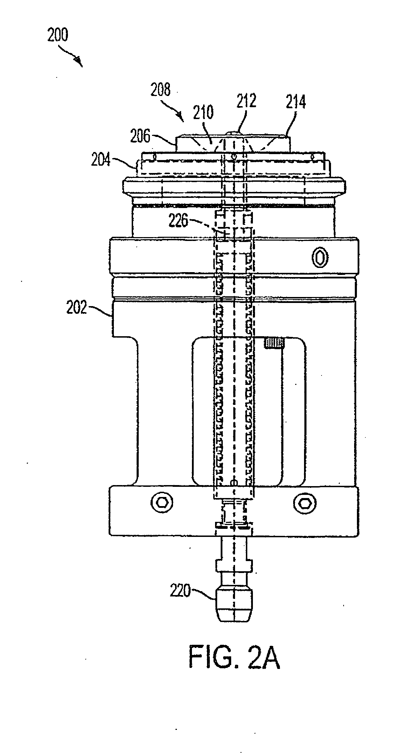

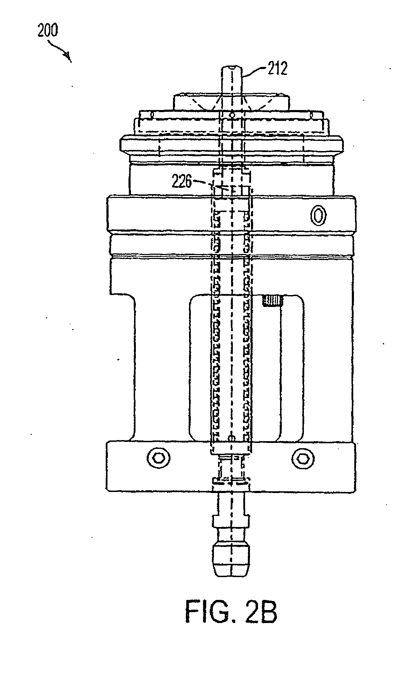

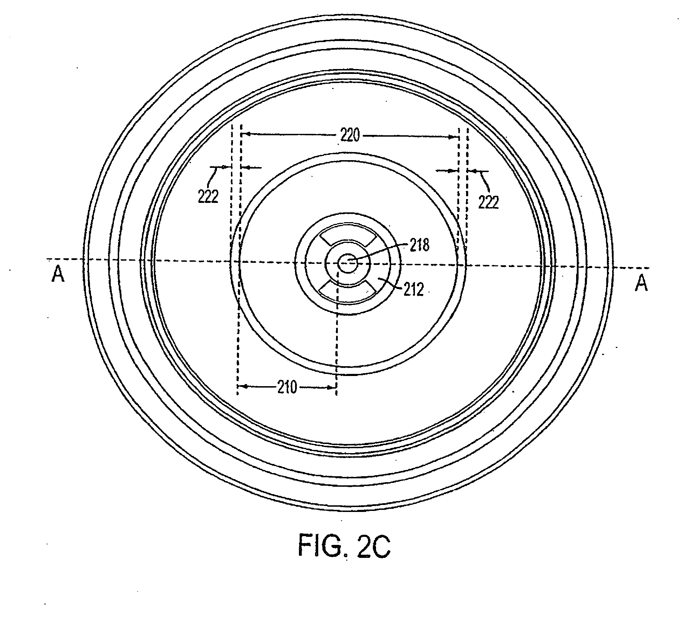

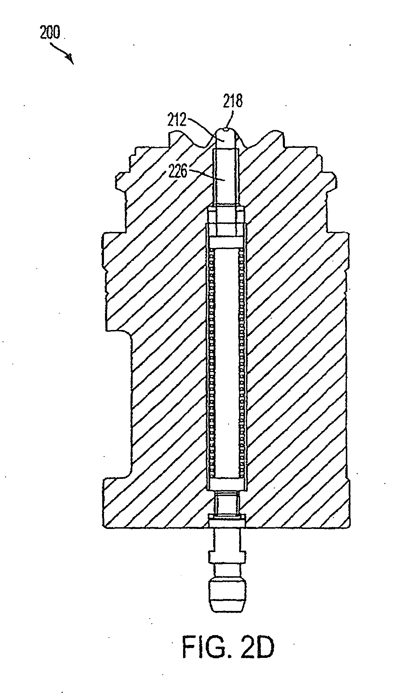

FIGs. 2A-2D illustrate an exemplary embodiment of a base assembly 200 according to the present invention. FIG. 2A illustrates a side view of the base assembly 200 having a push rod 226. FIG. 2B illustrates a side view of the base assembly 200 with a rod end 212 of the push rod 226 extended. FIG. 2C illustrates a top view of the base assembly 200. FIG. 2D illustrates a cross sectional view of the base assembly 200 along line A-A of FIG. 2C to further depict the push rod 226. In the following description, reference to FIGs. 2A-2D will be made.

The base assembly 200 includes a base pedestal 202, a base plug 204, a centering pin 220, and a push rod 226. The centering pin 220 may be used to secure and position the base assembly 200 in a blow molding apparatus (not shown). The base pedestal 202 may have any shape, so long as it has a hollow central region for receiving the push rod 226, and a top region adapted to connect with the base plug 204. In an alternative embodiment, the base plug 204 and the base pedestal 202 may be a single apparatus. During blow molding, the base assembly 200 is raised to connect with other mold assemblies for blow molding of a container. After the container is blow molded, the base assembly 200 is lowered to release the container.

The push rod 226 is a cylindrically shaped rod that is located above the centering pin 220 and extends through the base pedestal 202 up to a surface of the base plug 204. In one embodiment, the push rod 226 is a metal mold component. The base assembly 200 includes a mechanism that moves the push rod 226 and elevates a rod end 212 of the push rod 226 above the surface of the base plug 204. In an alternative embodiment, only the rod end 212 of the push rod 226 may be elevated. The mechanism for elevating the push rod 226 may be a spring, a cam, or may be driven pneumatically, hydraulically, or electronically. The mechanism may be located internal or external to the push rod 226. The rod end 212 is formed at the end of the push rod 226, and the top surface of the rod end 212 is used to form a dimple in the base of the container. The shape of the rod end 212 is similar to a truncated cone, where the end of the truncated cone includes a section 218. The section 218 of the rod end 212 may be concave, and the section 218 may be adapted to form a convex section in the base of the container that extends downward away from the center of the container. In alternative embodiments, the section 218 of the rod end 212 may be flat or convex extending upward toward the center of the container. The section 218 is used to reposition a moveable region of the base from an initially outward protruding position to a position within the container cavity, as will be discussed later in detail.

The base plug 204 includes a base mold 206 having a contact surface 208 adapted to contact a parison material during blow molding of a container. The contact surface 208 of the base mold 206 forms the shape of the base of the container. The contact surface 208 is a curvilinear mold for forming a moveable region and a bearing surface of a container base. As will be described later in detail, once the base of the bottle is formed, the moveable region of the base is repositioned from an outwardly protruding position toward the interior of the container. In one embodiment, the movable region is repositioned to a position within the interior of the container, thus forming a container base that is structurally and functionally similar to that of a container having a conventional push up.

The contact surface 208 includes a cavity 210, a surface 214, and a surface of the rod end 212. The surface of the cavity 210 and the surface of the rod end 212 form an inner region 220 of the base mold 206, and the surface 214 forms an outer region 222 of the base mold 206, with the outer region 222 being offset from the inner region 220. The inner region 220 and the outer region 222 are adapted to form a base of a container during blow molding. The outer region 222 is substantially flat and is adapted to form a bearing surface of a container. In an alternative embodiment, the outer region 222 may be non-flat or rounded, or may form a discontinuous bearing surface. The present invention can thus be adapted to form bearing surfaces with geometries known in the art.

When viewing a side cross section of the mold 206, the cavity 210 is a depression in the base mold 206 that is adapted to form a moveable region in a container. The cavity 210 begins at the outermost edge of the inner region 220, and curves both inward toward the center of the base mold 206 and downward toward the bottom of the base assembly 200. Prior to reaching the rod end 212, the cavity 210 reaches its bottom and begins to curve upward. From the bottom of the cavity 210, the cavity 210 curves both inward toward the center of the base mold 206 and upward away from the bottom of the base assembly 200. The cavity 210 ends at the truncated end of the rod end 212. In an alternative embodiment, the bottom of the rod end 212 may occur at other locations in the base mold 206 relative to the rod end 212, or may even be positioned on the rod end 212. When the base mold 206 is viewed from the top, the cavity 210 is a circular depression in the base mold 206 (see FIG. 2C). The cavity 210 is located between the outermost edge of the inner region 220 and the outermost edge of section 218 of the rod end 212. In an alternative embodiment, the cavity 210 may be any symmetric or asymmetric shape other than a circular depression. For example, the cavity may form a triangle, a rectangle, or a polygon. In a further alternative embodiment, the cavity 210 does not curve upward from its bottom, and instead may curve further downward or may be flat until it reaches the center of the base mold 206.

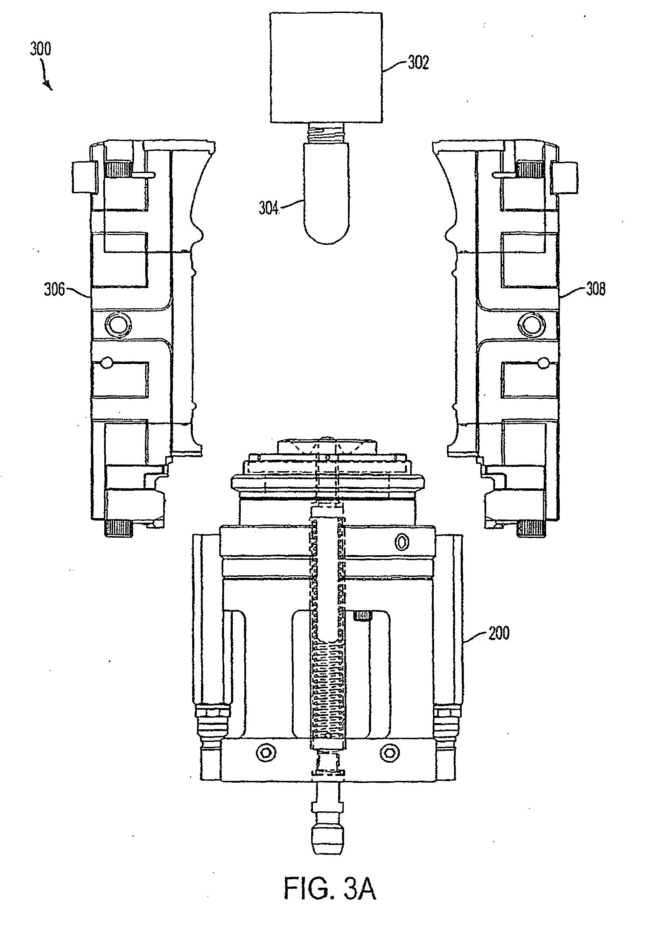

FIGs. 3A-3B illustrate an exemplary embodiment using a base assembly 200 to form a base of a container according to the present invention. In FIG. 3A, a parison 304 having a threaded finish is attached to a holder 302 of a blow molding apparatus (not shown) that is adapted to form a blow molded container. Surrounding the parison 304 is a first side mold 306, a second side mold 308, and the base assembly 200. The first side mold 306 contains a mold of one side of the container, and the second side mold 308 contains a mold of the other side. The first side mold 306 and the second side mold 308 may be mirror images of one another, or they may have different shapes. Other combinations and different numbers of molds may be used, as is understood by those of skill in the art.

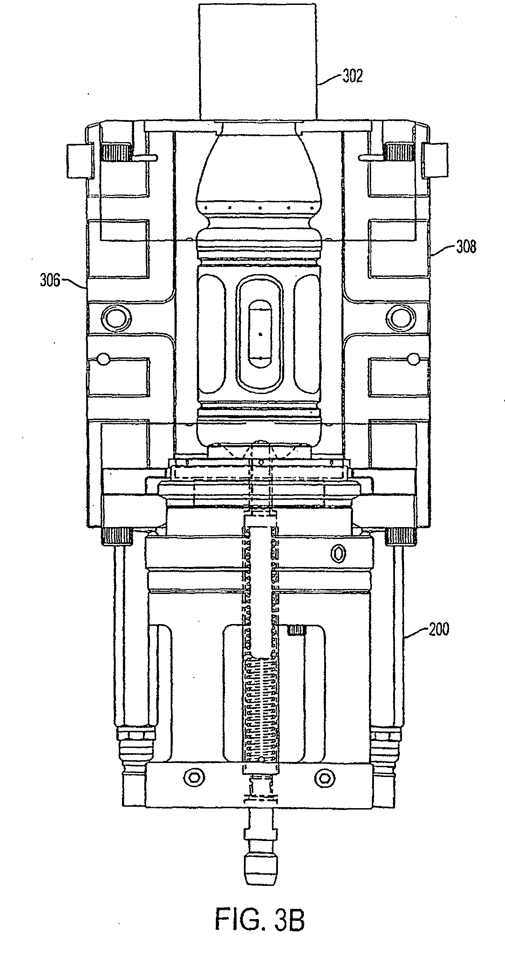

Prior to blow molding, the parison 304 is enclosed by the first side mold 306, the second side mold 308, and the base mold 206. As illustrated in FIG. 3B, once the parison is enclosed, gas is forced into the parison 304 to inflate the parison 304 in the first side mold 306, the second side mold 308, and the base mold 206. During inflation, the parison 304 stretches into the form of the first side mold 306, the second side mold 308, and the base mold 206. As the parison material contacts the base mold 206, the parison material is blown against the contact surface 208 into the cavity 210. The parison material stretches into the cavity 210 to form a moveable region in the base of the container.

By having the cavity 210 in the base mold 206, the parison material does not encounter a deep protrusion, which would cause cooling and would reduce plastic material orientation. Stretching the parison material during inflation into the cavity 210, as opposed to around a protrusion, allows the parison material to further stretch and orient since the parison material is blown into a wider space as compared with a narrow recess around a deep protrusion. The additional stretch increases the crystallinity of the molecules of the parison material, which increases the rigidity of the base and improves the structural integrity of the base. Blow molding the parison material into the cavity 210 also reduces the wall thickness of the base and reduces the occurrence of thick amorphous plastic sections in the base. Thus, the amount of plastic material present in the base can be reduced without detrimentally affecting container performance, and, in some instances, this technique improves the performance of the base.

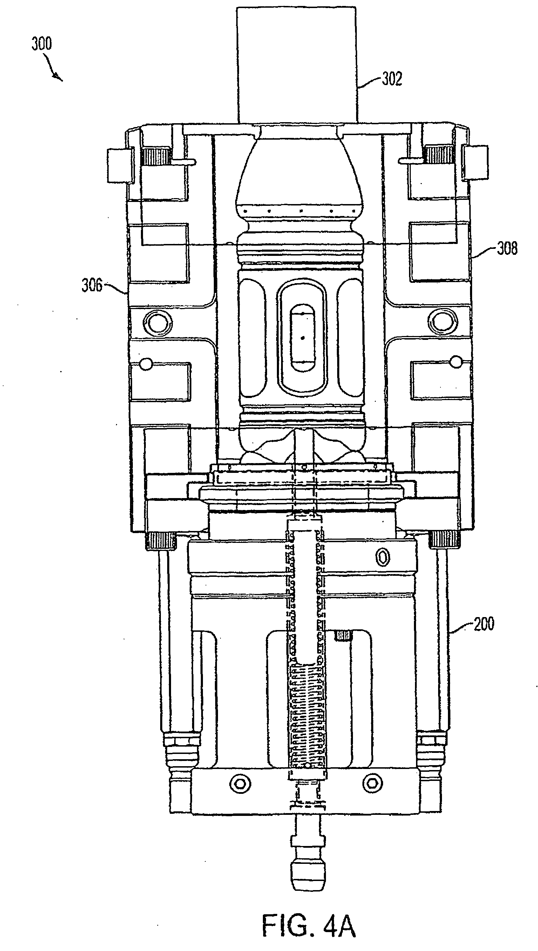

FIG. 4A illustrates an exemplary embodiment of the push rod 226 repositioning the base of the container according to the present invention. In this embodiment, prior to separating the first side mold 306, the second side mold 308, and the base assembly 200 from the container, the base of the container is repositioned. After the inflation process of the parison 304 has completed, a base having a moveable region that protrudes outward from the container is formed at the cavity 210. The moveable region of the container base is downwardly convex with respect to a bearing surface, as is described below in detail. The push rod 226 is then elevated upward toward the center of the container to elevate the rod end 212 above the contact surface 208 to exert pressure on the moveable region of the base. As the rod end 212 is further elevated, the moveable region is forced upward toward the center of the container into an upward position, which extends inward into the interior of the container with respect to the bearing surface. After the moveable region is repositioned upward, the push rod 226 may be lowered. Thereafter, the first side mold 306, the second side mold 308, and the base assembly 200 may release the blow molded container by separating.

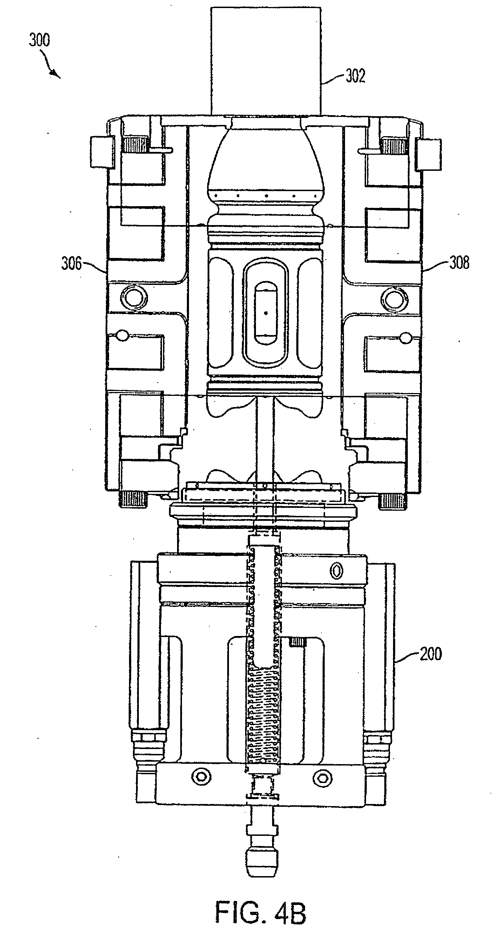

FIG. 4B illustrates an alternative exemplary embodiment of the push rod 226 repositioning the base of the container according to the present invention. In this embodiment, the base assembly 200 separates from the first side mold 306 and the second side mold 308 to release the base of the container. Afterwards, the rod end 212 is elevated until it reaches the moveable region of the container base. The rod end 212 then exerts pressure on the base of the container to reposition the moveable region of the base. Thereafter, the first side mold 306 and the second side mold 308 may release the blow molded container by separating so that the container may be further processed. In still other embodiments, the base of the container may be released from the molds without being repositioned and sent to a different device for repositioning the moveable region.

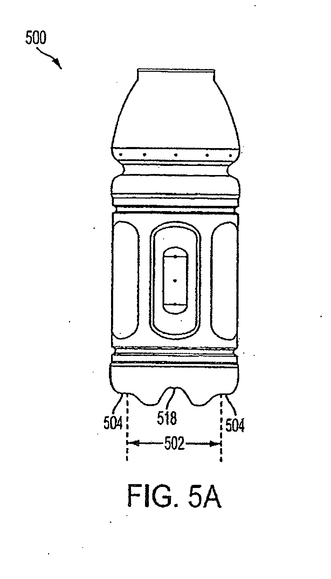

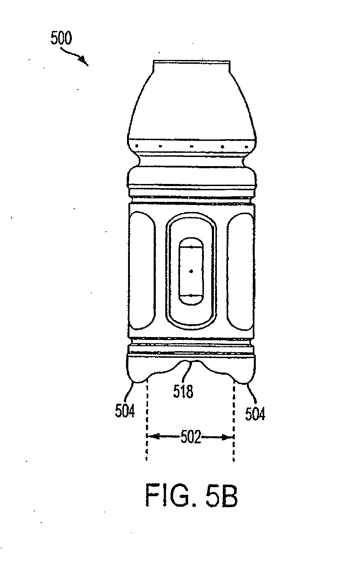

FIGs. 5A and 5B illustrate an exemplary embodiment of a container 500 prior to and after repositioning by the push rod 206 according to the present invention. Prior to repositioning, the base includes a moveable region 502 and a bearing surface 504, where at least a portion of the moveable region 502 protrudes outward from the base of the container beyond the bearing surface 504. The moveable region 502 of the container base is downwardly convex with respect to the bearing surface 504. During inflation using base mold 206, the moveable region 502 is formed by the inner region 220 of the base mold 206, and the bearing surface 504 is formed by the outer region 222. The moveable region 502 protrudes outward from an innermost edge of the bearing surface 504 away from the center of the container and is downwardly convex with respect to the bearing surface 504. The moveable region 502 is illustrated as being circular, but may be any symmetrical or asymmetrical shape. A dimple 518 is formed at a center of the moveable region 502 by the surface of the rod end 212 of the contact surface 208. The dimple 518 is upwardly convex and protrudes inward toward the center of the container 500. The dimple 518 provides a pocket in which the rod end 212 can be situated as the push rod 226 extends to reposition the moveable region 502 of the base.

During repositioning, the moveable region 502 is moved toward the center interior of the container by the extension of the rod end 212. In one embodiment, the moveable region 502 is moved within the interior of the container with respect to the bearing surface 504. In repositioning, the rod end 212 contacts the dimple 518 and forces the dimple 518 toward the center of the container. This repositions the moveable region 502 and causes the moveable region 502 to no longer extend or protrude beyond the bearing surface 504. In an alternative embodiment, the rod end 212 may contact the moveable region 502 at other locations to reposition the moveable region 502 of the base, as would be understood by those of ordinary skill in the art. In one embodiment, repositioning of the base occurs before the container is filled so that the container may be placed on a substantially flat surface for transport to, for example, a filling machine, or alternatively, for transport during manufacturing or for palletizing, as is known in the art. The filling machine may fill the container by any known filling process, including hot filling, cold filling, and other filling processes known by those skilled in the art. By repositioning the moveable region 502, the container can stand stably on a substantially flat surface and be processed similar to containers with conventionally manufactured push up bases. Thus, the base region, after repositioning the moveable region 502, has the appearance and functionality of a conventional blow molded base with a push up, without the disadvantages of the prior art.

The container 500 has a one-piece construction and can be prepared from a monolayer plastic material, such as a polyamide, for example, nylon; a polyolefin such as polyethylene, for example, low density polyethylene (LDPE) or high density polyethylene (HDPE), or polypropylene; a polyester, for example polyethylene terephthalate (PET), polyethylene naphtalate (PEN); or others, which can also include additives to vary the physical or chemical properties of the material. For example, some plastic resins can be modified to improve the oxygen permeability. Alternatively, the container 500 can be prepared from a multilayer plastic material. The layers can be any plastic material, including virgin, recycled and reground material, and can include plastics or other materials with additives to improve physical properties of the container. In addition to the above-mentioned materials, other materials often used in multilayer plastic containers include, for example, ethylvinyl alcohol (EVOH) and tie layers or binders to hold together materials that are subject to delamination when used in adjacent layers. A coating may be applied over the monolayer or multilayer material, for example to introduce oxygen barrier properties.

Although the present embodiment and the figures illustrated the parison 304 as a preform having threads at the top, the parison may also be a threadless plastic tube without departing from the scope of the invention. One example using a parison that is a plastic tube involves inserting a needle into the parison, and forcing gas through the needle to expand the plastic tube to take the shape of a mold. Additionally, any blow molding technique may be used for forming the container, including injection blow molding, stretch blow molding, or extrusion blow molding, as would be understood by those of skill in the art.

It is noted that the detailed description describes a technique for blow molding a moveable region 502 on a container base by molding a parison material into a cavity 210. However, this technique may be used to form other regions of a container other than the base, such as to form at least a portion of a hand grip of a container, or to form other deep protrusions of a container. The cavity 210 may also be located on either side mold 306 or 308, or on other locations in the base mold 206. This technique is useable on any region of a plastic container where a deep protrusion is required. The technique described herein increases the rigidity of a region having a deep protrusion, while reducing thick amorphous plastic sections around the region caused by the deep protrusion.

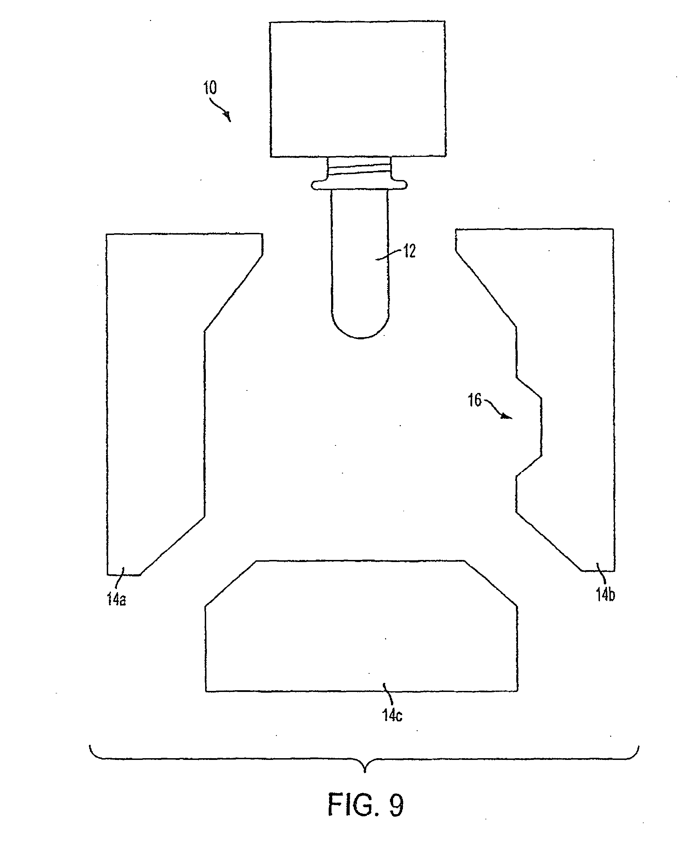

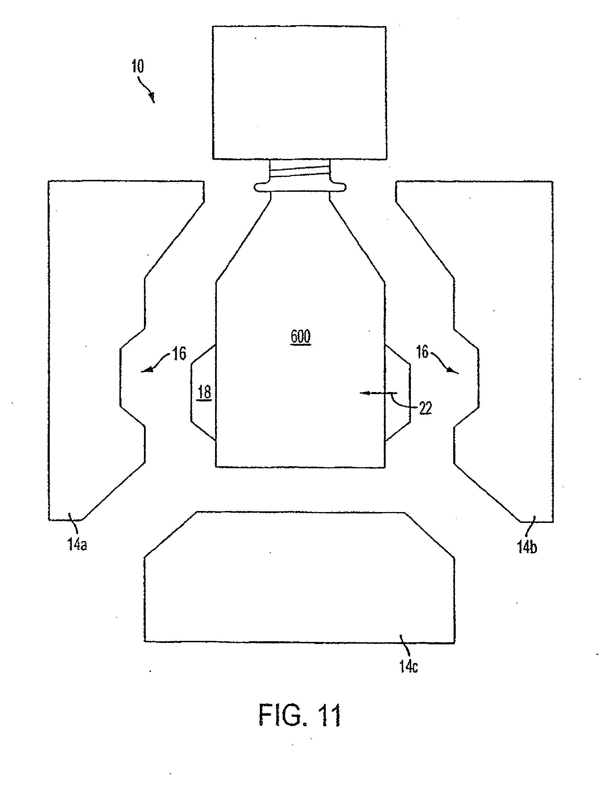

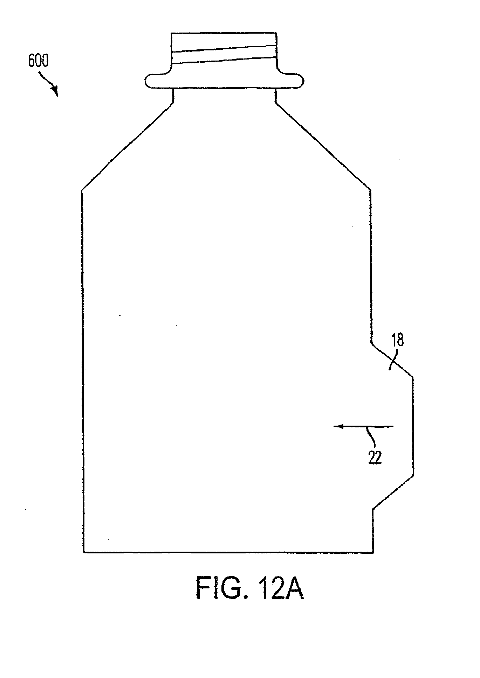

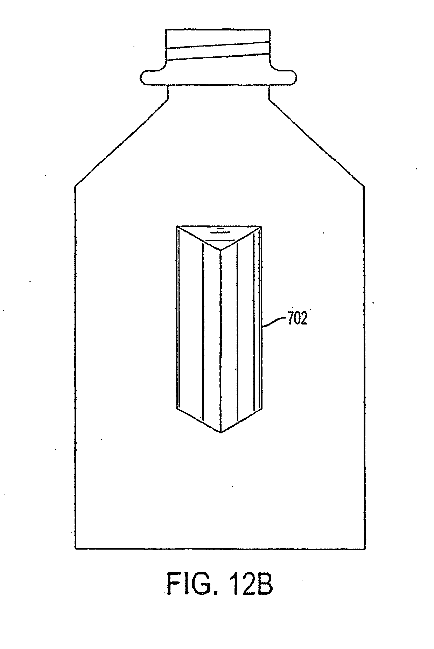

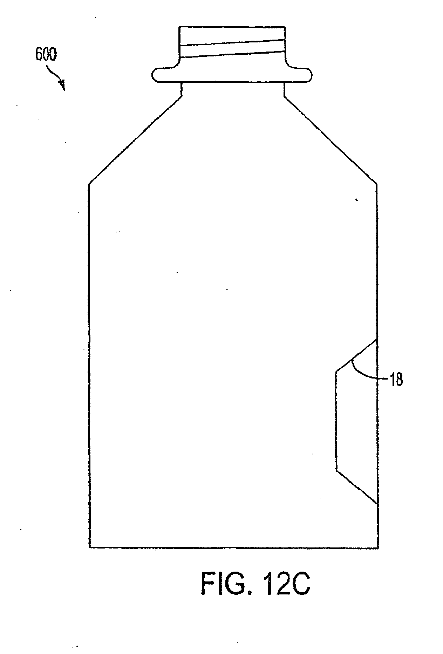

In an exemplary embodiment, as shown in FIG. 9, a blow-molding apparatus 10 may receive a parison 12 and enclose the parison with a mold 14a-c, which may include a recess 16 in the outer surface of the mold 14b. The blow-molding apparatus 10 may inflate the parison into the mold to form a blow molded container 100 (see FIG. 5). The blow molded container 100 may have a sidewall, a movable region 18 formed at the recess 16, and a hinge circumscribing an interface between the sidewall of container 100 and the movable region 18. The blow-molding apparatus may be adapted to move the movable region 18 about the hinge before filling the blow molded container 100. An internal volume of the blow molded container may be reduced by moving the movable region 18 into the center of the container 100 (arrow 22 in FIGs. 11 and 12A) as schematically shown in FIG. 12C. The movable region 18 may form a grip for the container 100. By blow molding the movable region 18 or grip in its outward position (outside the container) and then inverting the movable region to form the grip by using a simple mechanical force, the weight of the container may be reduced and the definition of the grip may be improved.

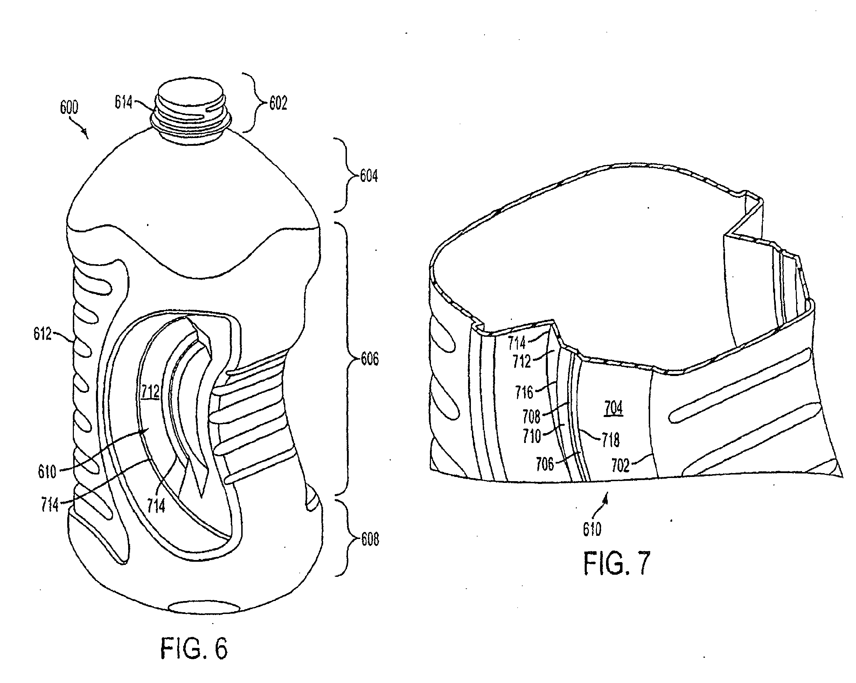

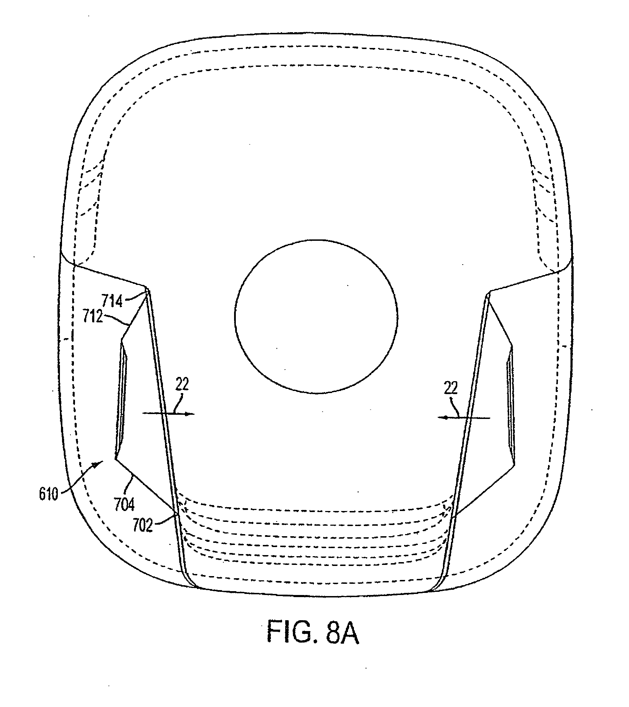

FIG. 6 illustrates an exemplary embodiment of a container representing the shape of the container as stretch blow molded, FIG. 7 illustrates an exemplary embodiment of a movable region of a container in its outwardly blown position, and FIGs. 8A-B illustrate an exemplary embodiment of the movable region of a container in its outwardly blown position and the final configuration of the grip, respectively.

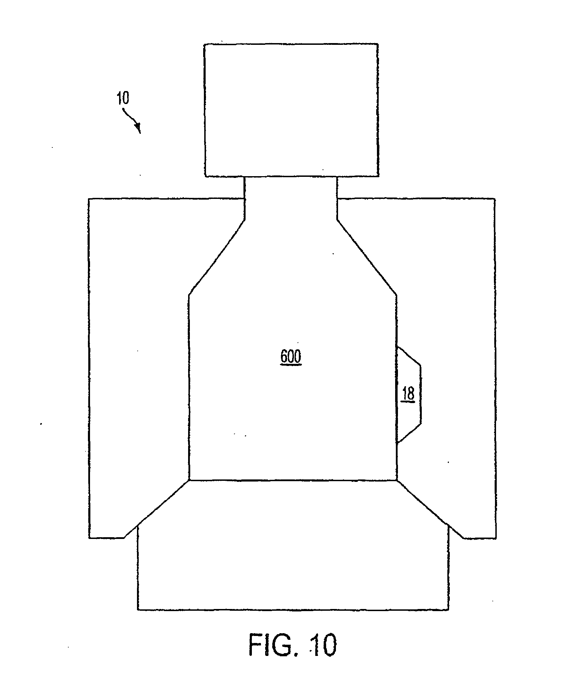

The exemplary embodiments will initially be discussed with reference to FIGs. 6-7. According to an exemplary embodiment, container 600 is blow molded into the shape as schematically illustrated in FIG 10. FIG. 6 illustrates a perspective side view of the exemplary container 600 according to an exemplary embodiment. As depicted, the container 600 includes an upper portion 602, a shoulder 604, a container body 606, and a base 608. The upper portion 602 of the container 600 generally is any structure having an opening into the interior of the container 600 and being adapted to receive a closure (not shown). The closure may be any device used to create a substantially air tight seal for a hot-filled product within the container 600, thus substantially preventing air from entering the container 600 through the upper portion 602. In one exemplary embodiment, the upper portion 602 includes threads 614 that are adapted to couple with a closure that is a twist-on cap. The cap may be twisted onto the threads 614 of the upper portion 602 to create a seal with the container 600. In an alternative embodiment, a sealing plug may be placed in the upper portion 602 to seal the container 600. Other closures or seals may be used, as will be appreciated by those of skill in the art.

The shoulder 604 of the container 600 extends from the top of the container body 606 to the bottom of the upper portion 602. Generally, the shoulder 604 narrows as it progresses from the container body 606 to the bottom of the upper portion 602. The shoulder 604 may have any desired shape, or may be omitted from the container 600. The shoulder 604 may include patterns, shapes, and other geometries, or alternatively, may be substantially smooth. In the depicted embodiment, the width of the bottom of the shoulder 604 corresponds to the width of the top of the container body 606, and narrows by curving inward as the shoulder 604 approaches the upper portion 602. The shoulder 604 curves outward before reaching the upper portion 602, and then curves inward as the shoulder 604 reaches the upper portion 602. The shoulder 604 may be other shapes and include other patterns, as will be appreciated by those of skill in the art.

The container body 606 of the container 600 extends from the base 608 to the shoulder 604 and defines an interior of the container 600. The container body 606 is positioned below the shoulder 604. In an alternative embodiment, if the shoulder 604 is omitted from the container 600, the container body 606 extends to the upper portion 602. The container body 606 may be any asymmetrical or symmetrical shape, such as, but not limited to, cylindrical, square, rectangular, or other geometries. Optionally, the container body 606 of the container 600 may include patterned support structure or vacuum panels. The patterned support structure and the vacuum panels may help provide structural integrity for the container 600.

In the depicted embodiment, the container body 606 has ribs 612 positioned at various locations on the container 600. The ribs 612 may be a series of recessed sections alternating with non-recessed sections on the container body 606. The ribs 612 may include other types and shapes and may also be placed at alternate locations on the container body 606, as will be appreciated by those of skill in the art. The ribs 612 may also be omitted from the container body 606, or may be placed at other locations on the container 600.

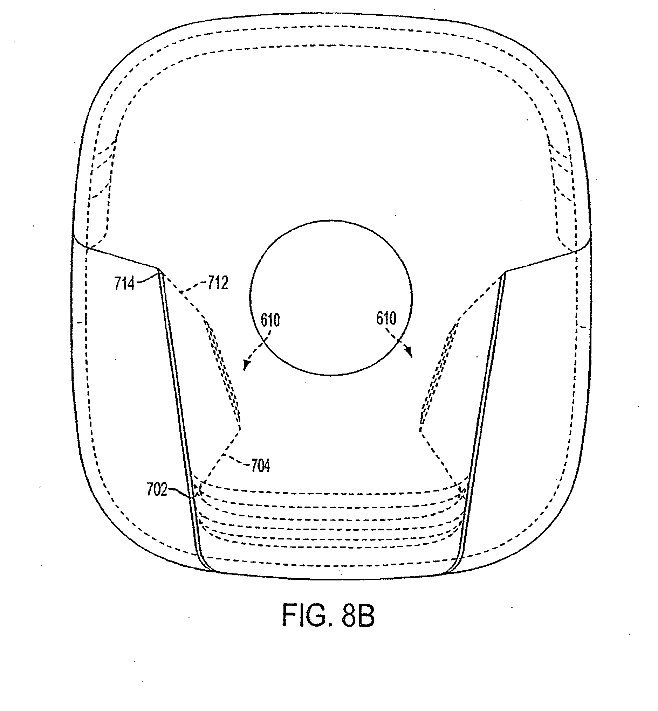

The container body 606 may also include a movable region 610 that initially is blow molded outside of the container 600 (see FIG. 11). The movable region 610 is comprised of a number of surfaces in the grip area of the container body 606. The number of surfaces are arranged in a way so that an external force (arrow 22) acting on the grip area causes the surfaces to fold in relation to one another until such a point where they snap into an inverted position toward the interior of the container 600. As depicted in FIG. 7, the movable region 610 may include a first hinge or seam 702, a first portion 704, a first inner wall 706, a second hinge or seam 714, a second portion 712, a second inner wall 710, a third hinge or seam 708, a fourth hinge or seam 716, and a fifth hinge or seam 718. The first hinge or seam 702 couples the first portion 704 so that portion 704 of the container body 606 is initially blow molded outside the container body 606 and then can be pushed inside the container as shown in Figures 8A-B, respectively. The second hinge or seam 714 couples the second portion 712 so that second portion 712 can be pushed inside the container 606 by pivoting about second hinge or seam 714. The fifth hinge or seam 718 couples the first portion 704 with the first inner wall 706, and the fourth hinge or seam 716 couples the second portion 712 with the second inner wall 710 so that these portions can be pushed inside container 606. The inverted movable region 610 is shown in Figure 8B.

The mold of the container forming assembly shown in FIGs. 9-11 may be made of first and second mold halves 14a, 14b that each may include a wall with a recess to form respective first and second movable gripping regions 610. The gripping regions 610 are initially blown outside the container and then inverted so that a consumer's hand easily fits into the inverted gripping regions.

Initially, when the container 600 is blow molded, the movable region 610 is formed extending away from the interior of the container 600. FIG. 8A illustrates the movable region 610 as blow molded extending away from the interior of the container 600, and FIG. 8B illustrates the movable region 610 extending toward the interior of the container 600 after inversion. During inversion, a force may be applied to cause the movable region 610 to invert. As the force is applied, the first portion 704 rotates about the first hinge or seam 702 and the second portion 712 rotates about the second hinge or seam 714. Additionally, the first portion 704 rotates about the fifth hinge or seam 718 relative to the first inner wall 706, the second portion 712 rotates about the fourth hinge or seam 716 relative to the second inner wall 710, and the first inner wall 706 rotates about the third hinge or seam 708 relative to the second inner wall 710. That is, a many sided movable region 610 is initially blown outside the container thereby avoiding the need for a mold with a deep-set protrusion around which plastic material has difficulty forming the desired about the protrusion. Then, the weights of the plastic at the hinges or seams along with the angles of the first and second portions and the inner walls are designed so that movable region 610 can be inverted into the container to form a deep-set grip(s) that a consumer can securely grip and that has a good ergonomic feel to the consumer. The container wall thickness at the hinges is thinner than the surrounding portions or inner walls, which are heavier as the plastic naturally moves in this manner. The angles of the first and second portions and the inner walls should be sufficiently steep so that the desired depth of a grip is achieved and the desired ergonomic feel.

During inversion, a sufficient force may be applied to the movable region 610 formed outside the container while the container 600 remains within the mold 14a-c (see Figure 10). As the Assignee of the present invention has successfully inverted projections blown outside the base of the container, enough force needs to be applied to the movable region 610 to cause inversion. In one embodiment, the inversion of the moveable region 18 (610 in FIGs. 6-8B) may occur as late into the blowing process as possible so that the container 600 is allowed to cool as much possible before the container 600 is released or ejected from the mold. The longer the container and movable region can cool, a better inversion result can be achieved. This is because the warmer the container is during inversion, the higher the probability that the container will crease at an undesired location resulting in an aesthetically unpleasing container and thus, a rejected container. The inversion may occur just before the container is ejected or released from the mold to reduce the likelihood that the inversion will form unwanted creases or deformities in the container 600. An air cylinder (not shown) may be used for the inversion of the movable region 610 by applying a force to the first portion 704 and to second inner wall 710. Alternatively, other mechanical, pneumatic, hydraulic, or cam operated means for inverting may be used, as will be appreciated by those skilled in the art. For example, the cam operated means may be included within the mold and the movable region may be inverted while the mold fully encloses the formed container.

The container 600 is blow molded into the shape depicted in FIG. 8A to avoid trapping material in recessed areas of a complex shaped mold and to improve the performance (less rejected containers) of the container 600 at the movable region 610 without increasing the amount of material to the region. The movable region 610 is formed into the shape shown in FIG. 8A to ensure that all surfaces of the movable region are properly formed with sufficient amounts of material and have sufficient definition. An advantage of forming the movable region 610 extending away from the interior of the container is that the rigidity at the movable region 610 is increased by allowing for further orientation of plastic material during the blow molding process (see FIGs. 6, 7, and 8A), as compared with initially forming the container with a deep-set protrusion extending toward the interior of the container (see FIG. 8B). By having the movable region 610 extend away from the interior of the container 600, the orientation of plastic material in the movable region 610 is increased since the mold would not trap material, but would allow the plastic material to further stretch into a cavity of a mold to form the movable region 610 during blow molding. As the orientation of the plastic molecules increases, the molecules straighten and may form a crystalline structure. Typically, the higher the crystallinity of the plastic, the greater the rigidity of the plastic, which improves the structural integrity of the container 600 at the movable region 610.

It is noted that if the container 600 would be initially blow molded into the shape depicted in FIG. 8B, the movable region 610 would not be fully formed at the region near the first hinge or seam 702 and near the second hinge or seam 712. This is the result of forming a container with the stretch blow molding technique. As a container is being stretch blow molded, gas stretches plastic material against a mold for the container, such as a mold for the container 600. If the mold contains a protrusion to form the movable region depicted in FIG. 8B, the plastic material would have to stretch around the protrusion from third hinge or seam 708 down to the region near the first hinge or seam 702 and near the second hinge or seam 712 (see FIG. 8B). The contact with the mold would trap material at the region near the third hinge or seam 708, and not allow the material to fully form down into the region near the first hinge or seam 702 and near the second hinge or seam 712. Moreover, forming the movable region 610 with such a protrusion would cause plastic to become trapped at the movable region 610, which may prevent other areas of the container to not have sufficient plastic to properly form those areas.

Stretch blow molding the container 600 into the shape as illustrated in FIGs. 6, 7, and 8B also reduces the wall thickness of the movable region 610 and reduces the occurrence of thick amorphous plastic sections near the movable region 610, as compared with forming the container with the movable region 610 extending outwardly from the container as depicted in FIG. 8A. This may allow the amount of plastic material present in the movable region 610 to be reduced without detrimentally affecting container performance, and, in some instances, this technique improves the performance of the movable region. Likewise, forming the container into the shape as illustrated in FIG. 8A may allow a more uniform distribution of plastic material in the base 608. Moreover, the increased rigidity may allow for the inversion of the movable region 610 without a substantial net distortion of the container body 606.

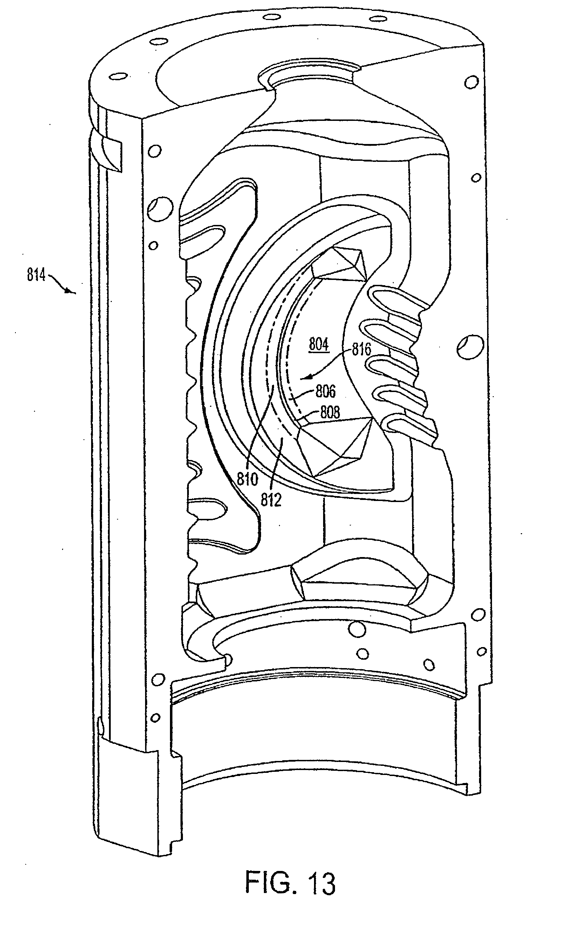

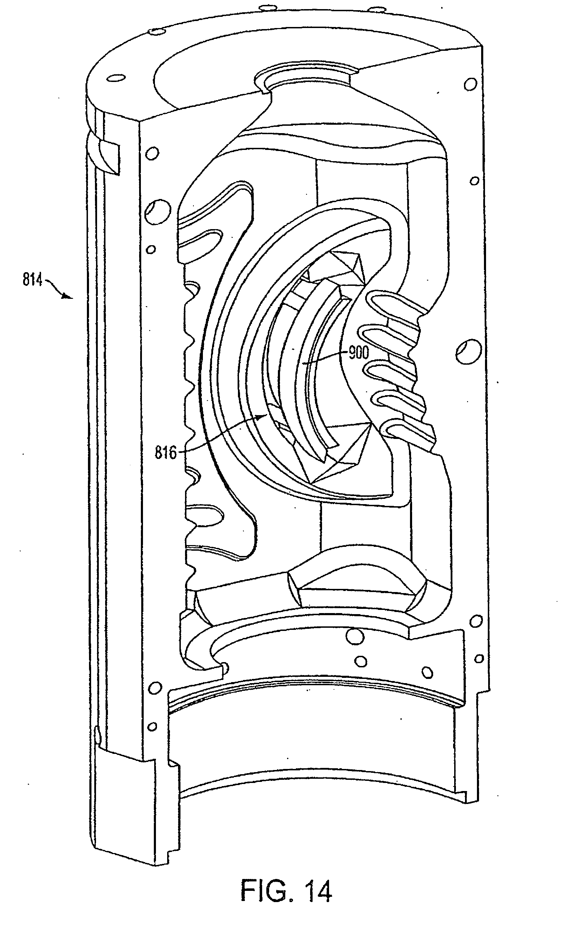

Figures 9-11 schematically illustrate a container forming assembly for forming a container from a parison. The assembly includes a mold 14a, 14b, and 14c that can be driven by a drive mechanism to enclose parison 12. A container 600 is blown within the closed mold assembly, as shown in Figure 10. A recess 16 may be disposed in a sidewall of mold 14a and mold 14b to form a two sided grip for a container. Figure 13 illustrates one side of the mold 814 for forming a container as shown in FIG.6 In this embodiment each side mold would include a recess 816 that has a first surface 804 adapted to form a first outer grip portion (704), a second surface 812 adapted to form a second outer grip portion (712), a third surface 806 adapted to form a first inner grip portion (706) adjacent the first outer grip portion (704), a fourth surface 810 adapted to form a second inner grip portion (710), and a fifth surface area 808 adapted to from a ridge area (708) of a movable gripping region 610. The forming assembly may include a first push rod adapted to rotate the first portion 704 of a movable region 610 about first hinge or seam 702 to invert the movable region so that it forms a gripping region. A second push rod may be employed to cause the second portion 712 to rotate about hinge or seam 714 to push both sides of the resultant gripping regions within container 600 prior to filling the container with food product. As shown in FIG. 14, a section 900 of the recess 816 that corresponds with surfaces 806 and 810 and surface area 808 is movable between the inactive position shown in FIG. 13 and the active position shown in FIG. 14.

This system also benefits from requiring less expensive components. While other systems may use complex pneumatic, hydraulic, or cam operated means to push pieces of the mold inward at a specific point in the blow molding cycle, the exemplary embodiments may use a simple mechanical means of inverting the movable region 110. This reduces the cost, molding time, and complexity of the mold set up as compared with conventional systems.

Thus, the container 600 according to exemplary embodiments of the present invention may improve the sufficient rigidity, definition, and performance of the container 600 at a movable region 610 thereby allowing a container to be formed that uses less plastic while maintaining the performance and appearance of the container.

The embodiments and examples discussed herein are non-limiting examples. The shape of the invertible inset are not limited to the examples shown, as the movable region may blown outward in a round or oval form and, when inverted, still obtain the same function - decrease the volume of the blown container.

The exemplary embodiments illustrated and discussed in this specification are intended only to teach those skilled in the art the best way known to the inventors to make and use the invention. Nothing in this specification should be considered as limiting the scope of the present invention. All examples presented are representative and non-limiting. The above-described exemplary embodiments of the invention may be modified or varied, without departing from the invention, as appreciated by those skilled in the art in light of the above teachings. It is therefore to be understood that, within the scope of the claims, the invention may be practiced otherwise than as specifically described.

## Claims

1. A method for forming a container, the method comprising:
inflating a parison (304) to form a blow molded container (500) having a moveable region (502) and a bearing surface (504);
releasing said blow molded container; and
repositioning said moveable region (502) before filling said blow molded container (500),
wherein said repositioning occurs after said releasing,
wherein, before said repositioning, at least a first portion of said moveable region (502) of said blow molded container is arranged outwardly below said bearing surface (504), and at least a second portion of said moveable region (502) of said blow molded container is arranged inwardly above said bearing surface (504), **characterized in that**
the second portion of said moveable region (502) arranged inwardly above said bearing surface (504) is located at the center of the moveable region of said blow molded container, and
**in that** the first portion of said moveable region (502) arranged outwardly below said bearing surface (504) surrounds the second portion of said moveable region (502).

2. The method according to claim 1, wherein said repositioning occurs when said blow molded container (500) is substantially cool.

3. The method according to claim 1, wherein said repositioning reduces an internal volume of the blow molded container (500).

4. The method according to claim 1,
wherein said inflating the parison is performed when the parison is enclosed by a mold (300) that includes a cavity (210),
wherein said mold (300) further comprises:
a first side mold (306);
a second side mold (308); and
a base mold (206),
wherein said releasing includes:
separating said first side mold (306) and said second side mold (308) from said blow molded container (500); and
separating said base mold (206) from said blow molded container (500).

5. The method according to claim 4, wherein said repositioning occurs after said separating said base mold (206).

6. The method according to claim 1, wherein said step of repositioning moves said movable region (502) toward the interior of the blow molded container (500).

7. The method according to claim 1, wherein said step of repositioning moves said at least a first portion of said movable region (502) to a position within the interior of the blow molded container (500).

## Patentansprüche

1. Verfahren zum Formen eines Behälters, wobei das Verfahren umfasst:
Aufblasen eines Vorformlings (304), so dass ein blasgeformter Behälter (500) mit einer beweglichen Region (502) und einer Stützfläche (504) zu bilden;
Freigeben des blasgeformten Behälters; und
Neupositionieren der beweglichen Region (502) vor einem Füllen des blasgeformten Behälters (500),
in welchem das Neupositionieren nach dem Freigeben erfolgt,
in welchem vor dem Neupositionieren wenigstens ein erster Bereich der beweglichen Region (502) des blasgeformten Behälters außen unterhalb der Stützfläche (504) angeordnet wird und wenigstens ein zweiter Bereich der beweglichen Region (502) des blasgeformten Behälters innen oberhalb der Stützfläche (504) angeordnet wird, **dadurch gekennzeichnet, dass**
der innen oberhalb der Stützfläche (504) angeordnete zweite Bereich der beweglichen Region (502) im Zentrum der beweglichen Region des blasgeformten Behälters liegt, und
dass der außen unterhalb der Stützfläche (504) angeordnete erste Bereich der beweglichen Region (502) den zweiten Bereich der beweglichen Region (502) umgibt.

2. Verfahren nach Anspruch 1, in welchem das Neupositionieren erfolgt, wenn der blasgeformte Behälter (500) im Wesentlichen kalt ist.

3. Verfahren nach Anspruch 1, in welchem das Neupositionieren ein Innenvolumen des blasgeformten Behälters (500) reduziert.

4. Verfahren nach Anspruch 1, in welchem das Aufblasen des Vorformlings durchgeführt wird, wenn der Vorformling durch eine Form (300) umschlossen ist, die einen Hohlraum (210) enthält,
in welchem die Form (300) ferner umfasst:
eine erste Seitenform (306);
eine zweite Seitenform (308); und
eine Basisform (206),
wobei das Freigeben umfasst:
Trennen der ersten Seitenform (306) und der zweiten Seitenform (308) von dem blasgeformten Behälter (500); und
Trennen der Basisform (206) von dem blasgeformten Behälter (500).

5. Verfahren nach Anspruch 4, in welchem das Neupositionieren nach dem Trennen der Basisform (206) erfolgt.

6. Verfahren nach Anspruch 1, in welchem der Schritt des Neupositionierens die bewegliche Region (502) in Richtung des Inneren des blasgeformten Behälters (500) bewegt.

7. Verfahren nach Anspruch 1, in welchem der Schritt des Neupositionierens den wenigstens einen ersten Bereich der beweglichen Region (502) in eine Position im Inneren des blasgeformten Behälters (500) bewegt.

## Revendications

1. Procédé pour former un récipient, le procédé comprenant les étapes consistant à :
gonfler une ébauche (304) pour former un récipient moulé par soufflage (500) présentant une région mobile (502) et une surface d'appui (504) ;
libérer ledit récipient moulé par soufflage ; et
repositionner ladite région mobile (502) avant de remplir ledit récipient moulé par soufflage (500),
dans lequel ledit repositionnement se produit après ladite libération,
dans lequel, avant ledit repositionnement, au moins une première partie de ladite région mobile (502) dudit récipient moulé par soufflage est agencée vers l'extérieur au-dessous de ladite surface d'appui (504), et au moins une seconde partie de ladite région mobile (502) dudit récipient moulé par soufflage est agencée vers l'intérieur au-dessus de ladite surface d'appui (504), **caractérisé en ce que**
la seconde partie de ladite région mobile (502) agencée vers l'intérieur au-dessus de ladite surface d'appui (504) est positionnée au centre de la région mobile dudit récipient moulé par soufflage, et
**en ce que** la première partie de ladite région mobile (502) agencée vers l'extérieur au-dessous de ladite surface d'appui (504) entoure la seconde partie de ladite région mobile (502).

2. Procédé selon la revendication 1, dans lequel ledit repositionnement se produit lorsque ledit récipient moulé par soufflage (500) est sensiblement froid.

3. Procédé selon la revendication 1, dans lequel ledit repositionnement réduit un volume interne du récipient moulé par soufflage (500).

4. Procédé selon la revendication 1,
dans lequel ladite étape de gonflage de l'ébauche est réalisée lorsque l'ébauche est enfermée par un moule (300) qui comporte une cavité (210),
dans lequel ledit moule (300) comprend en outre :
un premier moule latéral (306) ;
un second moule latéral (308) ; et
un moule de base (206),
dans lequel ladite libération comporte le fait de :
séparer ledit premier moule latéral (306) et ledit second moule latéral (308) dudit récipient moulé par soufflage (500) ; et
séparer ledit moule de base (206) dudit récipient moulé par soufflage (500).

5. Procédé selon la revendication 4, dans lequel ledit repositionnement se produit après ladite séparation dudit moule de base (206).

6. Procédé selon la revendication 1, dans lequel ladite étape de repositionnement déplace ladite région mobile (502) vers l'intérieur du récipient moulé par soufflage (500).

7. Procédé selon la revendication 1, dans lequel ladite étape de repositionnement déplace ladite au moins une première partie de ladite région mobile (502) jusqu'à une position qui se trouve à l'intérieur du récipient moulé par soufflage (500).
